ELKINGTON AND FIFE

Chartered Patent Agents & European Patent Attorneys
Patents Trade Marks Designs

SYDNEY SMITH, M.A., C.P.A., E.P.A.
J. J. LAREDO, M.Sc., C.P.A., E.P.A.
J. I. MARCHANT, B.Sc., C.P.A., E.P.A.
G. A. BOON, M.A., C.P.A., E.P.A., M.I.T.M.A.
DIANA KYLE, B.Sc., C.P.A., E.P.A.
J. H. LEWIN, M.A., C.P.A., E.P.A., M.I.T.M.A.
CLIVE FROUD, B.Sc., C.P.A., E.P.A.
FIONA CRAWFORD, M.A., C.P.A., E.P.A.

P. J. CHARLTON, B.Sc., C.P.A., E.P.A.

HIGH HOLBORN HOUSE
52/54 HIGH HOLBORN
LONDON WC1V 6SH

TELEPHONE 01-405 3505/6 01-405 3030
TELEX 27136
CABLES ELKFIF LONDON WC1
FAX (GROUPS 2 & 3) 01-405 1508
SEVENOAKS OFFICE & ACCOUNTS
53/55 HIGH STREET
SEVENOAKS, KENT TN13 1JF
TEL. SEVENOAKS (0732) 458881/459881
AND AT MUNICH

CONSULTANT
D. R. FENTIMAN, C.P.A.

OUR REFERENCE CF/008/5798/PNG

YOUR REFERENCE

European Patent Office,
Patentlaan 2,
P.O. Box 5818,
NL-2280 HV Rijswijk ZH,
The Hague,
Holland

10 August 1988

REGISTERED

Attn. Receiving Section
G. Meiklejohn

Dear Sirs,

re : European Patent Application 88 306 070.9
ICI Americas Inc.

Prompted by your 8th August communication concerning our 6th July leter, we now repeat same:

We have noticed a minor clerical error in this application which was filed on 4th July.

In line 22 on page 32 and, correspondingly, in line 23 on page 4, "$R^e$" should read "$R^c$". We would ask that this obvious inconsistency be rectified at the appropriate moment.

Yours faithfully

Clive Froud

Clive Froud
European Patent Attorney
Elkington and Fife

Europäisches Patentamt
European Patent Office
Office européen des brevets

(19)

(11) Publication number: **0 298 679 A2**

# EUROPEAN PATENT APPLICATION

(12)

(21) Application number: 88306070.9

(51) Int. Cl.4: **A01N 25/32 , A01N 35/06**

(22) Date of filing: 04.07.88

A request for correction of pages 4 and 32 of the originally filed specification has been filed pursuant to Rule 88 EPC. A decision on the request will be taken during the proceedings before the Examining Division (Guidelines for Examination in the EPO, A-V, 2.2).

(30) Priority: 06.07.87 US 69919
17.06.88 US 206050

(43) Date of publication of application:
11.01.89 Bulletin 89/02

(84) Designated Contracting States:
AT BE CH DE ES FR GB GR IT LI LU NL SE

(71) Applicant: **ICI AMERICAS INC**
**Concord Pike & New Murphy Road**
**Wilmington Delaware 19897(US)**

(72) Inventor: **Buren, Lawrence Lamont**
**10415 Westacres Drive**
**Cupertino California 95014(US)**
Inventor: **Hsu, Joanna Keng-Hsin**
**626 Picasso Terrace**
**Sunnyvale California 94097(US)**

(74) Representative: **Froud, Clive et al**
**Elkington and Fife High Holborn House 52/54**
**High Holborn**
**London WC1V 6SH(GB)**

(54) **Herbicidal compositions of acylated 1,3,5-tricarbonyl cyclohexane herbicides and antidotes therefor.**

(57) A herbicidal composition characterised in that it comprises a herbicidally effective amount of an acylated 1,3,5-tricarbonyl cyclohexyl compound corresponding to the following general formula:

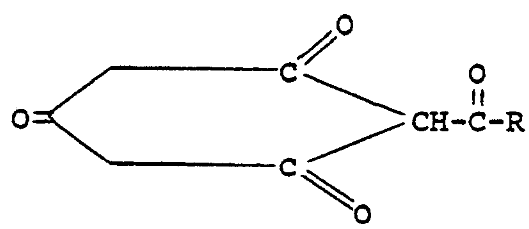

and tautomeric enol forms thereof, which is optionally substituted in the cyclohexyl position, and R represents an optionally substituted aromatic moiety with one or more aromatic groups; and a non-phytotoxic antidotally effective amount of a compound selected from amides of haloalkanoic acids, N-phenylcarbamates, N-phenylsulfonyl carbamates and 1,8-naphthalic anhydride is disclosed, as is the production and use thereof.

EP 0 298 679 A2

# HERBICIDAL COMPOSITIONS OF ACYLATED 1,3,5-TRICARBONYL CYCLOHEXANE HERBICIDES AND ANTIDOTES THEREFOR

This invention relates to herbicidal compositions of acylated 1,3,5-tricarbonyl cyclohexane compounds and antidotes therefor and also to production and methods of use thereof.

An herbicide is a compound which adversely controls or modifies plant growth, e.g., killing, retarding, defoliating, desiccating, regulating, stunting, tillering, stimulating and dwarfing. The term "plant" refers to all physical parts of a plant, including seeds, seedlings, saplings, roots, tubers, stems, stalks, foliage, and fruits. "Plant growth" includes all phases of development from seed germination to natural or induced cessation of life.

Herbicides are generally used to control or eradicate weed pests. They have gained a high degree of commercial success because it has been shown that such control can increase crop yield and reduce harvesting costs.

The most popular methods of herbicide application include: preplant incorporation into the soil; in-furrow application to seeds and surrounding soil; pre-emergence surface treatment of seeded soil; post-emergence treatment of the plant and soil; and preplant seed treatment.

A manufacturer of an herbicide generally recommends a range of application rates and concentrations calculated to maximize weed control. The range of rates varies from approximately 0.01 to 50 pounds per acre (0.0112 to 56 kilograms per hectare [kg/ha]), and is usually in the range of from 0.1 to 25 pounds per acre (0.112 to 28 kg/ha). The term "herbicidally effective amount" describes an amount of an herbicide compound which adversely controls or modifies plant growth. The actual amount used depends upon several considerations, including particular weed susceptibility and overall cost limitations.

An important factor influencing the usefulness of a given herbicide is its selectivity towards crops. In some cases, a beneficial crop is susceptible to the effects of the herbicide. In addition, certain herbicidal compounds are phytotoxic to some weed species but not to others. To be effective, an herbicide must cause minimal damage (preferably no damage) to the beneficial crop while maximizing damage to weed species which infest the locus of the crop.

To preserve the beneficial aspects of herbicide use and to minimize crop damage, many herbicide antidotes have been prepared.These antidotes reduce or eliminate damage to the crop without substantially impairing the damaging effect of the herbicide on weed species. See, for example, U.S. Patents 4,021,224, 4,021,229 and 4,230,874.

The precise mechanism by which an antidote reduces herbicidal crop injury has not been established. An antidote compound may be a remedy, interferent, protectant, or antagonist. As used herein, "antidote" describes a compound which has the effect of establishing herbicide selectivity, i.e., continued herbicidal phytotoxicity to weed species by the herbicide, and reduce or be non-phytotoxic to the cultivated crop species. The term "antidotally effective amount" describes an amount of an antidote compound which counteracts to some degree a phytotoxic response of a beneficial crop to an herbicide.

Certain 2-benzoyl-1,3-5-cyclohexanetrione compounds have been found to be very effective herbicides with broad general herbicidal activity against a wide range of plant species. The method of controlling vegetation with the compounds comprises applying an herbicidally effective amount of the compounds, usually with an inert carrier, to the area where herbicidal control is desired. However, the herbicidal acylated 1,3,5-cyclohexanetrione compounds have been found in some instances to adversely affect or interfere with the cultivation of a variety of crops. Therefore, the effective use of these herbicides is further enhanced and requires in many instances the addition of an antidotally effective amount of an antidote compound, said antidote being antidotally effective with the herbicide.

It has now been discovered that certain compounds when used in an antidotally effective amount are effective antidotes for the protection of a variety of crops from adverse herbicidal injury or the reduction of adverse herbicidal injury caused by the use of an herbicidally effective amount of an acylated 1,3,5-tricarbonyl cyclohexane herbicidal compound.

Such acylated cyclohexanetrione-1,3,5 herbicide compounds of this invention are contained within and correspond to the following general formula

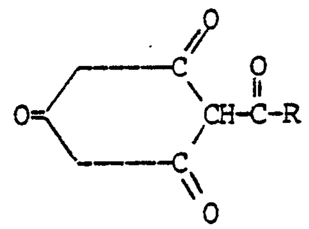

(A)

in which R is a group as hereinafter defined (and may generally be an optionally substituted aromatic moiety). Compounds of this type have been described in a number of references as being useful, for instance, as chemical intermediates and/or pesticides. The undefined remainder of the molecule represented in Formula A, which includes the tricarbonyl group, has a generally cyclical structure. In particular, this cyclical structure is the cyclical 6-member 1,3,5-tricarbonylcyclohexyl group.

Acylated cyclohexane 1,3,5-tricarbonyl compounds of this type have the general structure

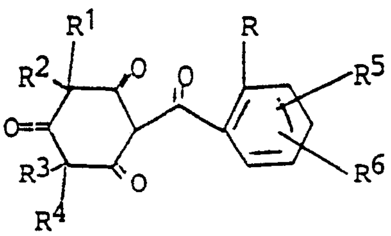

(I)

wherein

R is hydrogen; halogen; $C_1$-$C_2$ alkyl, $C_1$-$C_2$ alkoxy, nitro; cyano; $C_1$-$C_2$ haloalkyl, $R^aSO_n$- wherein n is 0 or 2 and $R_a$ is $C_1$-$C_2$ alkyl, trifluoromethyl or difluoromethyl; or trifluoromethoxy or difluoromethoxy; and

$R^1$ is hydrogen or $C_1$-$C_4$ alkyl;

$R^2$ is hydrogen or $C_1$-$C_4$ alkyl; or

$R^1$ and $R^2$ together are $C_2$-$C_5$ alkylene;

$R^3$ is $C_1$-$C_4$ alkyl;

$R^4$ is $C_1$-$C_4$ alkyl; or

$R^3$ and $R^4$ together are $C_2$-$C_5$ alkylene;

$R^5$ and $R^6$ independently are (1) hydrogen; (2) halogen; (3) $C_1$-$C_4$ (4) $C_1$-$C_4$ alkoxy; (5) trifluoromethoxy; (6) cyano; (7) nitro; (8) $C_1$-$C_4$ haloalkyl; (9) $R^bSO_n$- wherein n is the integer 0, 1 or 2; and

$R^b$ is (a) $C_1$-$C_4$ alkyl;

(b) $C_1$-$C_4$ alkyl substituted with halogen or cyano,

(c) phenyl; or

(d) benzyl;

10) $-NR^cR^d$ wherein

$R^c$ and $R^d$ independently are hydrogen or $C_1$-$C_4$ alkyl;

(11) $R^eC(O)$- wherein $R^e$ is $C_1$-$C_4$ alkyl or $C_1$-$C_4$ alkoxy;

(12) $-SO_2NR^cR^d$ wherein $R^c$ and $R^d$ are as defined; or

(13) $-N(R^c)C(O)R^d$ wherein $R^e$ and $R^d$ are as defined.

Compounds of particular interest are those in which $R^5$ is in the 3-position. In such compounds $R^5$ is hydrogen, chlorine, fluorine, trifluoromethyl, cyano, $C_1$-$C_4$ alkoxy or $C_1$-$C_4$ thioalkyl. Also of particular interest are compounds in which $R^6$ is in the 4-position, wherein $R^6$ is halogen, cyano, trifluoromethyl, or $R^bSO_2$ where $R^b$ is $C_1$-$C_4$ alkyl, such as methyl, or $C_1$-$C_4$ haloalkyl, such as chloromethyl, difluoromethyl or trifluoromethyl.

The term "$C_1$-$C_4$ alkyl" includes methyl, ethyl, n-propyl, isopropyl, n-butyl, sec-butyl, isobutyl and t-butyl. The term "halogen" includes chlorine, bromine, iodine and fluorine. The term "$C_1$-$C_4$ alkoxy" includes methoxy, ethoxy, n-propoxy, isopropoxy, n-butoxy, sec-butoxy, isobutoxy and t-butoxy. The term "$C_1$-$C_4$ haloalkyl" includes the alkyl groups defined above under $C_1$-$C_4$ alkyl in which one or more hydrogens is replaced by chlorine, bromine, iodine or fluorine.

Salts of the above-described compounds (as defined hereinafter) are included within the scope of the instant invention.

The compounds of this invention can have the following four structural formulae because of

tautomerism:

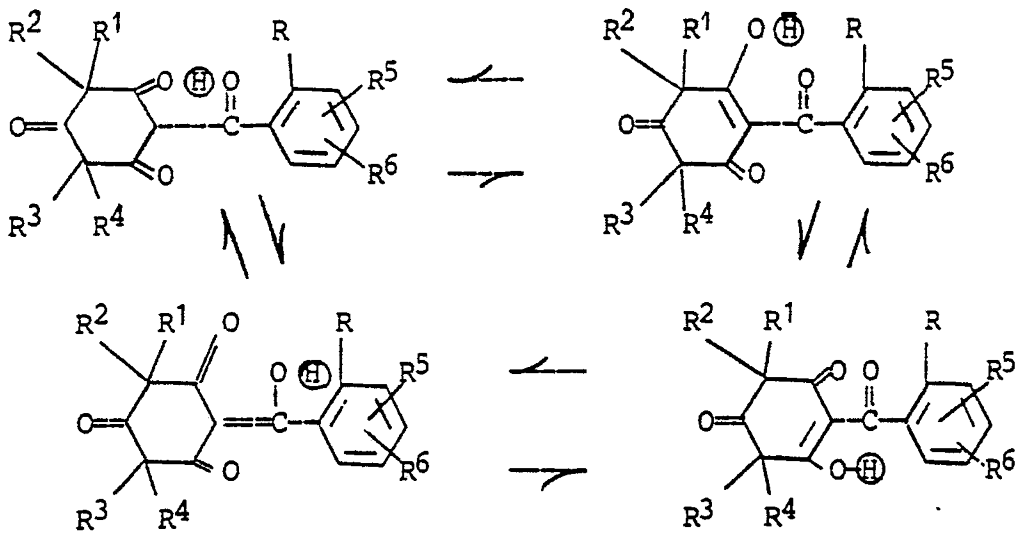

wherein R, $R^1$, $R^2$, $R^3$, $R^4$, $R^5$ and $R^6$ are as defined above.

The circled proton on each of the four tautomers is reasonably labile. These protons are acidic and can be removed by reaction with a base to form a salt having an anion of the following four resonance forms:

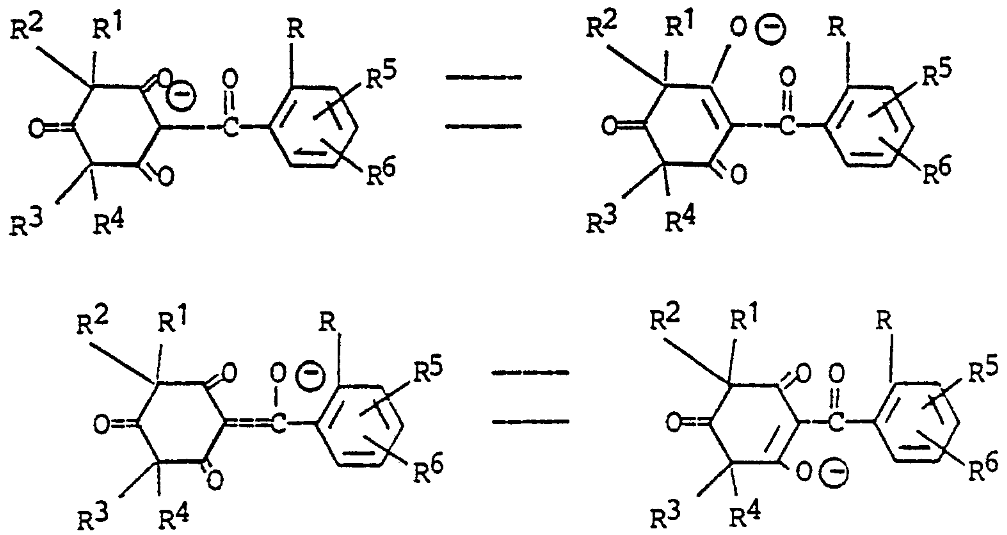

wherein R, $R^1$, $R^2$, $R^3$, $R^4$, $R^5$ and $R^6$ are as defined above.

Examples of cations of these bases are inorganic cations such as alkali metals, e.g. lithium, sodium and potassium; the alkaline earth metals, e.g. calcium and magnesium or ammonium or organic cations such as substituted ammonium, sulfonium, sulfoxonium or phosphonium wherein the substitutents are aliphatic or aromatic groups.

Examples of cations of these bases are inorganic cations such as alkali metals, e.g. lithium, sodium and potassium; the alkaline earth metals, e.g. calcium and magnesium or ammonium or organic cations such as substituted ammonium, sulfonium, sulfoxonium or phosphonium wherein the substituents are aliphatic or aromatic groups.

Those skilled in the art will recognize in considering the salts of this invention that varying degrees of association between the anion and cation will exist depending upon the nature of the cation. In some instances with a suitable cation, such as copper, the salt can exist in a chelated form.

The herbicide compounds of this invention and their salts are active herbicides of a general type. That is, they are herbicidally effective against a wide range of plant species. The method of controlling undesirable vegetation of the present invention comprises applying an herbicidally effective amount of the

above-described compounds or their salts to the area where control is desired.

Compounds of this type, with various substituents on either or both of the cyclohexane or phenyl rings, are disclosed in the following copending United States patent application, assigned to the Assignee herewith, and entitled "Certain 2-Benzoyl-1,3,5-cyclohexanetriones", Serial No. 634,408, filed July 31, 1984.

The following is a list of sample compounds as found within the above description of active herbicides.

TABLE I

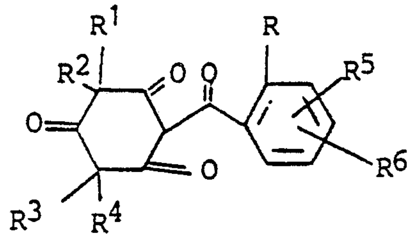

| Comp. No. | R | $R^1$ | $R^2$ | $R^3$ | $R^4$ | $R^5$ | $R^6$ | m.p. °C |
|---|---|---|---|---|---|---|---|---|
| 1 | $NO_2$ | $CH_3$ | $CH_3$ | $CH_3$ | $CH_3$ | H | H | 112-117 |
| 2 | $NO_2$ | $CH_3$ | $CH_3$ | $CH_3$ | $CH_3$ | H | 4-Cl | 76-82 |
| 3 | Cl | $CH_3$ | $CH_3$ | $CH_3$ | $CH_3$ | H | 4-$SO_2CH_3$ | 176-179° |
| 4 | $CH_3$ | $CH_3$ | $CH_3$ | $CH_3$ | $CH_3$ | H | 4-$SO_2C_2H_5$ | gum |
| 5 | $CF_3$ | $CH_3$ | $CH_3$ | $CH_3$ | $CH_3$ | H | 4-$CF_3$ | viscous oil |
| 6 | $NO_2$ | $CH_3$ | $CH_3$ | $CH_3$ | $CH_3$ | H | 4-$SO_2CH_2Cl$ | oil |
| 7 | Cl | $CH_3$ | $CH_3$ | $CH_3$ | $CH_3$ | H | 4-F | gum |
| 8 | Cl | $CH_3$ | $CH_3$ | $CH_3$ | $CH_3$ | 3-$OC_2H_5$ | 4-$SO_2C_2H_5$ | gum |
| 9 | $NO_2$ | $CH_3$ | $CH_3$ | $CH_3$ | $CH_3$ | H | 4-$SO_2CH_3$ | gum |
| 10 | Cl | $CH_3$ | $CH_3$ | $CH_3$ | $CH_3$ | H | 4-$SCH_3$ | gum |
| 11 | $CH_3$ | $CH_3$ | $CH_3$ | $CH_3$ | $CH_3$ | 3-$NO_2$ | H | gum |
| 12 | I | $CH_3$ | $CH_3$ | $CH_3$ | $CH_3$ | H | H | gum |
| 13 | $OCH_3$ | $CH_3$ | $CH_3$ | $CH_3$ | $CH_3$ | H | 4-Cl | gum |
| 14 | Cl | $CH_3$ | $CH_3$ | $CH_3$ | $CH_3$ | 3-$OCH_3$ | 4-Br | gum |
| 15 | $NO_2$ | $CH_3$ | $CH_3$ | $CH_3$ | $CH_3$ | H | 4-$SO_2nC_3H_7$ | gum |
| 16 | $NO_2$ | $CH_3$ | $CH_3$ | $CH_3$ | $CH_3$ | H | 4-$SO_2N(CH_3)_2$ | gum |
| 17 | $NO_2$ | $CH_3$ | $CH_3$ | $CH_3$ | $CH_3$ | H | 4-CN | 148-150° |
| 18 | $SO_2CH_3$ | $CH_3$ | $CH_3$ | $CH_3$ | $CH_3$ | H | H | gum |
| 19 | $NO_2$ | $CH_3$ | $CH_3$ | $CH_3$ | $CH_3$ | H | 4-$CF_3$ | gum |
| 20 | H | $CH_3$ | $CH_3$ | $CH_3$ | $CH_3$ | H | 4-Cl | gum |
| 21 | H | $CH_3$ | $CH_3$ | $CH_3$ | $CH_3$ | H | 4-$SCF_3$ | gum |
| 22 | H | $CH_3$ | $CH_3$ | $CH_3$ | $CH_3$ | H | 4-$OCF_3$ | gum |
| 23 | Cl | $CH_3$ | $CH_3$ | $CH_3$ | $CH_3$ | 3-Cl | 4-$SO_2C_2H_5$ | gum |
| 24 | H | $CH_3$ | $CH_3$ | $CH_3$ | $CH_3$ | H | 4-C(O)$CH_3$ | gum |
| 25 | H | $CH_3$ | $CH_3$ | $CH_3$ | $CH_3$ | H | 4-$SO_2$-$CH_3$ | 129-131 |
| 26 | H | $CH_3$ | $CH_3$ | $CH_3$ | $CH_3$ | H | 4-$SCH_3$ | 89-92 |
| 27 | H | $CH_3$ | $CH_3$ | $CH_3$ | $CH_3$ | H | 4-$CF_3$ | 115-125 |
| 28 | H | $CH_3$ | $CH_3$ | $CH_3$ | $CH_3$ | H | 4-CN | 87-95 |

This invention embodies a two-part herbicidal system comprised of (a) the herbicide as described hereinabove and (b) an effective antidote therefor. It has been found that such antidote compounds can be selected from a wide range of chemical substances that have been found to be effective as herbicide antidotes for the above-described acylated 1,3,5-tricarbonylcyclohexane herbicide compounds. The preferred compositions of this invention may include any one or more of such antidotes with the herbicides. The variety of crops on which the present herbicide compounds are useful can be significantly broadened by the use of an antidote to protect one or more crops from injury and render the herbicide composition more selective against weeds. Some of the more important types of antidotes are amides of haloalkanoic acids, phenylcarbamates, phenylsulfonyl carbamates, aromatic oxime derivatives, thiazole carboxylic acids and derivatives, and 1,8-naphthalic anhydride.

Amides of haloalkanoic acids have the generalized formula

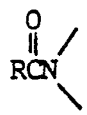

in which R is a mono- or poly-haloalkyl group. The halogens may be optionally chloro, bromo or iodo; chloro and bromo are the preferred halogens, and the preferred group for R in these compounds is dichloromethyl, $Cl_2CH$- and dibromopropionyl, $BrCH_2CHBrCH_2$-, i.e., the compounds are amides of dichloroacetic acid; and amides of dibromopropionic acid. In such compounds the nitrogen is further substituted by at least one other functional group. This class of compounds also includes those in which the nitrogen forms a portion of a heterocyclic ring with substituents, as will be described below.

Antidotes of this type are described in a number of publications such as U.S. Patents 4,021,224; 4,256,481; and 4,294,764, and British Patent 1,521,540. U.S. Patent 4,021,224 contains a broad disclosure of such types of compounds and indicates a great many possibilities for mono- or di-substitution on the nitrogen atom.

Such useful antidotes include amides of haloalkanoic acids having the formula

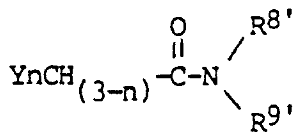

in which n is 1 or 2, preferably n is 2, Y is chlorine or bromine and $R^{8'}$ and $R^{9'}$ are independently $C_1$-$C_{12}$ alkyl, $C_2$-$C_{12}$ alkenyl, $C_1$-$C_4$ alkylene substituted with phenyl; dialkoxyalkyl wherein the alkoxy and alkyl groups each have 1-4 carbon atoms and $R^{8'}$ and $R^{9'}$ taken together are $C_1$-$C_4$ alkyleneoxyalkylene, or alkylenethioalkylene substituted with a spiro 5- to 6-membered heterocyclic ring, phenyl or alkyl, alkoxyalkyl, alkylthioalkyl.

Preferable embodiments of said antidotes include those wherein n is 1 or 2, $R^{8'}$ and $R^{9'}$ are independently $C_1$-$C_6$ alkyl, $C_2$-$C_6$ alkenyl, dialkoxyethyl, cyclic acetal or $C_1$-$C_2$ alkylene substituted with phenyl. Further embodiments include those antidotes wherein n is 2, $R^{8'}$ and $R^{9'}$ are independently $C_1$-$C_4$ alkyl, $C_2$-$C_4$ alkenyl, dimethoxyethyl, dioxolanylmethyl or benzyl.

One type of antidote disclosed in U.S. Patent 4,021,224 is N,N-diallyl dichloroacetamide,

1. 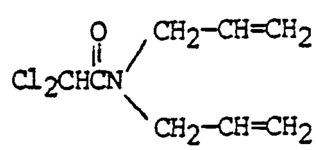

and which is generally known commercially as R-25788, and as Compound A hereafter, and is included as an antidote in several commercial products containing thiolcarbamate herbicides.

Another class of amides of haloalkanoic acids is that in which the nitrogen atom is contained in an oxazolidine or thiazolidine ring. Preferably R is dichloromethyl, and these oxazolidines and thiazolidines

have the general formula

2. 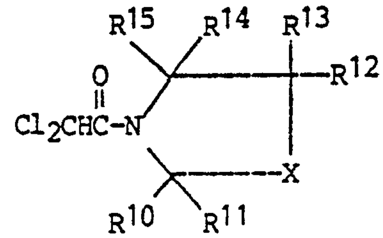

wherein $R^{10}$, $R^{11}$, $R^{12}$, $R^{13}$, $R^{14}$ and $R^{15}$ are independently hydrogen, lower alkyl, alkoxyalkyl, alkylthioalkyl, lower alkyl sulfonyl methyl or phenyl, or $R^{10}$ and $R^{11}$ taken together form an alkylene group, preferably a butylene, pentylene or hexylene group optionally substituted by one or two methyl groups and X is oxygen or sulfur. Compounds of these types are disclosed in a number of patents, including U.S. Patents, 4,021,224 and 4,256,481. Representative compounds of this type include (where not specifically mentioned the radical is hydrogen):

2,2,5-trimethyl-N-dichloroacetyl oxazolidine ($R^{10}$, $R^{11}$ and $R^{12}$ = methyl) (known as B);
2,2-dimethyl-5-n-propyl-N-dichloroacetyl oxazolidine ($R^{10}$, $R^{11}$ = methyl, $R^{12}$ = n-propyl);
2,2-dimethyl-5-phenyl-N-dichloroacetyl oxazolidine ($R^{10}$, $R^{11}$ = methyl, $R^{12}$ = phenyl) (known as C);
2,2-spirocyclohexyl-N-dichloroacetyl oxazolidine ($R^{10}$ plus $R^{11}$ taken together = pentamethylene); and
2,2-dimethyl-N-dichloroacetyl-5-ethyl oxazolidine ($R^{10}$, $R^{11}$ = methyl, $R^{12}$ = ethyl).

Other compounds in which $R^{10}$ and $R^{11}$ taken together are alkylene are disclosed for instance in British Patents 1,512,540 and 2,023,582 and Hungarian Patent 181,621.

A third type of haloalkanoic acid amide is disclosed generally in U.S. Pat. 4,294,764 and has the general formula

3. 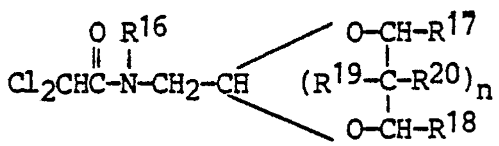

in which $R^{16}$ may be one of a number of alkyl, alkenyl or alkynyl moieties; $R^{17}$, $R^{11}$, $R^{19}$ and $R^{20}$ are independently hydrogen or methyl; and n is 0 or 1. A representative compound of this type is the compound N-(1,3-dioxolan-2-yl-methyl)-N-(2-propenyl)-2,2-dichloroacetamide, which has the formula

4. 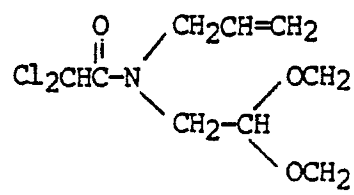

This corresponds to the previous formula (3) in which $R^{16}$ is 2-propenyl, $R^{17}$ and $R^{18}$ are both hydrogen and n is 0.

The amount of a given antidote to be utilized in combination with the herbicide composition of this invention and the manner of its utilization and resulting efficacy can vary according to various parameters, such as the particular antidote to be employed, the crop which is to be protected, the amount or rate of herbicide to be applied, the soil and climatic conditions of the agricultural environment in which the mixture is to be applied. The selection of a specific antidote for use in the herbicide composition, the manner in which it is to be applied (e.g., tank mix, in-furrow application, seed treatment, etc.), the determination of activity which is non-phytotoxic but antidotally effective, and the amount necessary to provide this result, can be readily performed utilizing the test procedures in the cited patents, such as U.S. Patent 4,021,224, in accordance with common practice in the art.

N-phenyl carbamate antidote compounds corresponding to the following formula have been found useful and effective with the above described herbicides.

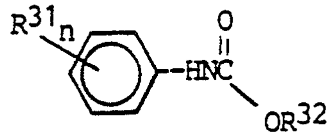

in which $R^{31}$ is hydrogen, lower alkyl having 1 to 2 carbon atoms, halogen, methoxy, propargyloxy, methylsulfoxy, methylthio, ethoxycarbonyl, methoxysulfone, trifluoromethylthio, nitrosyl, nitrile, N-substituted sulfamoyl where the substituent is carboxyalkyl having 3 to 4 carbon atoms, 3,3-methylpropynyl or p-chlorobenzyl, N,N-substituted sulfamoyl where the substituent is propynyl, and substituted carbamoyloxy wherein the substituent is chloropropenyl, propenyl, chloroethyl, 1-fluoroethyl or isopropyl;

n is an integer from 1 to 3, inclusive; and

$R^{32}$ is lower alkyl having 1 to 3 carbon atoms, lower alkenyl having 3 to 5 carbon atoms, lower alkynyl having 3 to 6 carbon atoms, haloalkyl having 2 to 4 carbon atoms, haloalkenyl having 3 to 6 carbon atoms, alkylamido having 4 carbon atoms, 1-isopropenylimino having 3 carbon atoms, ethylthioethyl, chlorophenoxyethyl, and chlorophenylthioethyl;

provided that when $R^{31}$ is hydrogen, alkyl, alkoxy, haloalkyl alkylcarbamoyloxy, or alkenylcarbamoyloxy, $R^{32}$ is other than alkynyl, haloalkyl, or alkylamido.

A still further useful antidote is 1,8-naphthalic anhydride.

N-(substituted benzenesulfonyl) carbamates are useful as active herbicidal antidotes to protect against and decrease crop injury when used with an acylated 1,3,5-tricarbonyl cyclohexane herbicide when applied in various methods. Utility of said compositions to protect against and decrease phytotoxic crop injury is obtained when employing a 1,3,5-tricarbonyl cyclohexane herbicide and a two-part herbicide system comprising a first part of one or more 1,3,5-tricarbonyl cyclohexane herbicide and a second part of an effective antidote therefor, wherein said antidote compounds of the class N-benzene sulfonyl carbamates having the formula

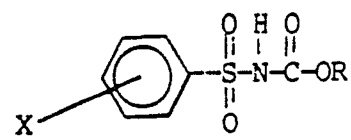

wherein X is hydrogen, bromo, chloro, methoxy, trifluoromethyl, and methyl; n is an integer from 1 to 3 inclusive, provided that when X is bromo, trifluoromethyl, or methoxy, n is 1; and R is selected from alkyl, haloalkyl wherein halo is chloro or fluoro, alkenyl, haloalkenyl and wherein halo is chloro, alkynyl, trifluoroacetamidomethyl, dialkylamino cyanoalkylthioalkyl, phosphonomethyl, lower alkyl substituted phenyl, 4-chlorophenylthiomethyl, alkoxyalkyl, alkylthioalkyl, cyanoalkyl, alkoxycarbonylalkyl, formamidoalkyl, alkoxycarbonylalkenyl, alkylcarbonylalkyl, 1,3-dioxacyclohexane-5,5-methylene, phenyl, chlorophenyl, benzyl, 4-chlorobenzyl, 4-methoxybenzyl, 3-pyridylmethyl, phenoxyethyl, 3-phenylpropyn-2-yl, methylthioacetimino, acetone imino and benzaldimino.

The benzenesulfonyl carbamates are also described in U.S. Patent 4,230,847.

For other descriptions of antidotes and methods of their use, reference is made to U.S. Pat. 3,959,304, Teach, May 25, 1976; U.S. Pat. 3,989,503, Pallos et al., Nov. 2, 1976; U.S. 3,131,509, Hoffman, May 5, 1964; U.S. Pat. 3,564,768, Hoffman, Feb. 3, 1971; U.S. Pat. 4,137,070, Pallos et al., Jan. 30, 1979; U.S. Pat. 4,294,764, Rinehart, Oct. 13, 1981; U.S. Pat. 4,256,481, Gardi et al., May 17, 1981; U.S. Pat. 4,415,353, Pallos et al., Nov. 15, 1983; and U.S. Pat. 4,415,352, Pallos et al., Nov. 15, 1983.

The antidote is applied in conjunction with the herbicide in a non-phytotoxic antidotally effective amount. By "non-phytotoxic" is meant an amount of the antidote which causes at most minor or no injury to the desired crop species. By "antidotally effective" is meant an antidote used in an amount which is effective as an antidote with the herbicide to decrease the extent of injury caused by the herbicide to the desired crop species. The preferred weight ratio of herbicide to antidote is from about 0.1:1 to about 30:1. Another preferred weight ratio range is from about 1:1 to about 20:1. An even more preferred weight ratio range is from about 2:1 to about 15:1.

The following examples are for illustrative purposes only and are not intended as necessarily representative of the overall testing performed and are not intended to limit the invention in any way. As one skilled in the art is aware, in herbicidal testing, a significant number of factors that are not readily controllable can affect the results of individual tests and render them non-reproducible. For example, the results may vary depending on environmental factors, such as amount of sunlight and water, soil type, pH

of the soil, temperature, and humidity, among other factors. Also, the depth of planting, the application rate of the herbicide, the application rate of the antidote, and the resulting ratio of the herbicide-to-antidote application, as well as the nature of crops being tested, can affect the results of the test. Results may vary from crop to crop and within the crop varieties.

Results hereinafter are reported as a fraction as follows:

$$\left[ \frac{\%\ \text{injury with antidote}}{\%\ \text{injury without antidote}} \right]$$

## TESTS

### Test I

Condition of test: Pre-emergence surface applied (PES) Greenhouse test
Soil Type: Sandy Loam
Method of application and procedure:
Pre-emergence surface applied as tank mix (PES-TM).
Ratings: 23 days after treatment
Seedings:
Crop:
- Corn 55A - CN XL55A
- Corn 5602 - CN S-5602
- Corn 7759 - CN S-7759
- Corn 4502 - CN S-4502
- Corn 5260 - CN S-5260
- Corn XL-23A - CN XL-23A
- Corn XL-447 - CN XL-447
- Corn 3737 - CN P-3737
- Corn 3183 - CN P-3183
- Corn Pioneer 3475 - CN P-3475

Weed:
- SETVI - green foxtail

ANTIDOTE:

B = 2,2,5-trimethyl-N-dichloroacetyl oxazolidine

TEST I - cont.

| Treatment: Herbicide + Antidote | Rate* lb/A | SETVI | CN XL55A | CN 5692 | ** CN 7759 | CN 4502 | CN5260 |
|---|---|---|---|---|---|---|---|
| Cmpd. 2 + B | 0.0625 + 0.25 | 85/90 | 0/10 | 10/20 | - | 0/10 | 0/0 |
| Cmpd. 2 + B | 0.0625 + 0.5 | 100/90 | 0/10 | 0/20 | - | 0/10 | 0/0 |
| Cmpd. 2 + B | 0.0625 + 1 | 95/90 | 10/10 | 10/20 | - | 0/10 | 0/0 |
| Cmpd. 2 + B | 0.125 + 0.25 | 90/95 | 20/40 | 15/25 | - | 20/35 | 20/40 |
| Cmpd. 2 + B | 0.125 + 0.5 | 100/95 | 20/40 | 15/25 | - | 20/35 | 0/40 |
| Cmpd. 2 + B | 0.125 + 1 | 100/95 | 15/40 | 30/25 | - | 10/35 | 5/40 |

| Treatment: Herbicide + Antidote | Rate* lb/A | SETVI | CN XL23A | CN XL447 | CN P-3737 | CN P-3183 | CN P-3475 |
|---|---|---|---|---|---|---|---|
| Cmpd. 2 + B | 0.0625 + 0.25 | 95/98 | 0/35 | 10/30 | 15/45 | 15/10 | 0/0 |
| Cmpd. 2 + B | 0.0625 + 0.5 | 95/98 | 0/35 | 15/30 | 15/45 | 20/10 | 0/0 |
| Cmpd. 2 + B | 0.0625 + 1 | 85/98 | 0/35 | 15/30 | 20/45 | 40/10 | 5/0 |
| Cmpd. 2 + B | 0.125 + 0.25 | 90/100 | 10/60 | 15/70 | 35/60 | 35/65 | 5/55 |
| Cmpd. 2 + B | 0.125 + 0.5 | 100/100 | 10/60 | 15/70 | 35/60 | 40/65 | 10/55 |
| Cmpd. 2 + B | 0.125 + 1 | 100/100 | 20/60 | 35/70 | 25/60 | 40/45 | 10/55 |

* Herbicide + Antidote
** Seeded but did not germinate

TESTS II AND III

Method of Application and Procedure:
Pre-emergence Surface Applied (PES)
Soil type: Sandy Loam
Rating 20 days after treatment
Seedings:
Crop:
- Milo - ML
- Corn 55A - CN XL55A
- Corn XL-447 - CN XL447
- Corn XL-23A - CN XL-23A
- Corn Pioneer 3475 - CN P-3475
- Corn DeKalb XL-45 - CN XL-45
- Corn DeKalb XL-71 - CN XL-71
- Barley CM-67 - BA
- Wheat (Anza) - WH
- Soybean (Williams) - SOY

Weed:
- SETVI - (Setaria viridis) - green foxtail
- ABUTH - (Abutilon theophrasti)- velvetleaf

ANTIDOTES:

A = 2,2-dimethyl-N-dichloroacetyl oxazolidine
B = 2,2,5-trimethyl-N-dichloroacetyl oxazolidine
C = 2,2-dimethyl-5-n-propyl-N-dichloroacetyl oxazolidine
D = N-allyl-N-(2-(1,3-dioxalanyl)methyl dichloroacetamide
CDAA = 2-chloro-N,N-di-2-propenyl acetamide
E = 2,2-spirocyclohexyl-N-dichloroacetyl oxazolidines
NA = naphthalic anhydride
F = 2,2,2-trifluoroethyl p-chlorophenylcarbamate
G = 2-Butyn-1-yl p-toluenesulfonylcarbamate
H = N-(p-Chlorobenzenesulfonyl)-ethylcarbamate

TEST II

| Treatment: Herbicide + Antidote | Rate* lb/A | SETVI | CN XL55A | CN XL447 | CN XL23A | CN 3475 |
|---|---|---|---|---|---|---|
| Cmpd. 2 + B | 0.125 + 0.25 | 100/100 | 65/85 | 80/95 | 80/85 | 70/85 |
| Cmpd. 2 + B | 0.125 + 0.5 | 100/100 | 50/85 | 60/95 | 30/85 | 30/85 |
| Cmpd. 2 + A | 0.125 + 0.25 | 100/100 | 80/85 | 80/95 | 80/85 | 80/85 |
| Cmpd. 2 + A | 0.125 + 0.5 | 100/100 | 60/85 | 70/95 | 80/85 | 80/85 |
| Cmpd. 2 + A | 0.125 + 1 | 100/100 | 65/85 | 70/95 | 60/85 | 60/85 |
| Cmpd. 2 + C | 0.125 + 0.25 | 100/100 | 75/85 | 85/95 | 85/85 | 75/85 |
| Cmpd. 2 + C | 0.125 + 0.5 | 100/100 | 75/85 | 75/95 | 65/85 | 70/85 |
| Cmpd. 2 + C | 0.125 + 1 | 95/100 | 75/85 | 75/95 | 70/85 | 65/85 |
| Cmpd. 2 + E | 0.125 + 0.25 | 100/100 | 80/85 | 85/95 | 85/85 | 85/85 |
| Cmpd. 2 + E | 0.125 + 0.5 | 100/100 | 90/85 | 85/95 | 90/85 | 85/85 |
| Cmpd. 2 + E | 0.125 + 1 | 100/100 | 85/85 | 85/95 | 85/85 | 85/85 |
| Cmpd. 2 + D | 0.125 + 0.25 | 100/100 | 70/85 | 85/95 | 80/85 | 80/85 |
| Cmpd. 2 + D | 0.125 + 0.5 | 100/100 | 70/85 | 70/95 | 65/85 | 65/85 |
| Cmpd. 2 + D | 0.125 + 1 | 95/100 | 60/85 | 70/95 | 45/85 | 60/85 |
| Cmpd. 2 + NA | 0.125 + 0.25 | 95/100 | 80/85 | 90/95 | 90/85 | 85/85 |
| Cmpd. 2 + NA | 0.125 + 0.5 | 100/100 | 85/85 | 90/95 | 90/85 | 85/85 |
| Cmpd. 2 + NA | 0.125 + 1 | 100/100 | 70/85 | 70/95 | 60/85 | 60/85 |

TEST II- cont.

| Treatment: Herbicide + Antidote | Rate* lb/A | SETVI | CN XL55A | CN XL447 | CN XL23A | CN 3475 |
|---|---|---|---|---|---|---|
| Cmpd. 2 + CDAA | 0.125 + 0.125 | 100/100 | 90/85 | 90/95 | 85/85 | 85/85 |
| Cmpd. 2 + CDAA | 0.125 + 0.25 | 100/100 | 90/85 | 90/95 | 85/85 | 85/85 |
| Cmpd. 2 + CDAA | 0.125 + 0.5 | 100/100 | 95/85 | 95/95 | 90/85 | 90/85 |

* Herbicide + Antidote

Milo (sorghum bicolor) injury with or without antidote protection approached 100% all treatments.

TEST III

Material and methods: Aluminum flats were filled with a sandy loam soil. The flats were then seeded with one row each of corn (Zea mays) (DeKalb XL-45), corn (DeKalb XL-71), barley (CM-67) (Hordeum vulgare), wheat (Anza) (Triticum aestivum), green foxtail (Setaria viridis) and velvetleaf (Abutilon theophrasti). Before the seed was covered with soil, the appropriate number of flats were sprayed at 80 GPA with solutions of one of three safeners (B, A and F) at the rate of 4 lb a.i./A. After covering the seed with soil, the appropriate flats were sprayed at 80 GPA with Compound No. 2 as the herbicide. Some flats were reserved as "check" (i.e. no chemical application) and some with only a herbicide or only an antidote applied.

| Herbicide Compound No. 2 lb/A | Antidote 4 lb/A | VL | WG | WH | BA | CN XL-71 | CN XL-55 |
|---|---|---|---|---|---|---|---|
| 0.0156<br>.-<br>0<br>1<br>5<br>6<br>0 | B | 100/100 | 100/100 | 70/80 | 10/75 | 10/90 | 0/10 |
| | A | 99/100 | 100/100 | 80/80 | 75/75 | 80/90 | 0/10 |
| | F | 100/100 | 70/100 | 20/80 | 20/75 | 0/90 | 0/10 |
| 0.0313<br>.-<br>0<br>3<br>1<br>3<br>0 | B | 100/100 | 100/100 | 95/98 | 90/98 | 85/95 | 75/80 |
| | A | 100/100 | 100/100 | 95/98 | 90/98 | 90/95 | 40/80 |
| | F | 100/100 | 95/100 | 80/98 | 90/98 | 95/95 | 75/80 |
| 0.0625<br>.-<br>0<br>6<br>2<br>5<br>0 | B | 100/100 | 100/100 | 98/100 | 98/98 | 95/98 | 90/95 |
| | A | 100/100 | 100/100 | 98/100 | 90/98 | 95/98 | 80/95 |
| | F | 100/100 | 90/100 | 90/100 | 90/98 | 98/98 | 95/95 |

## TEST IV

Material and methods: Aluminum flats were filled with a sandy loam soil. The flats were then seeded with one row each of corn (CN XL-55A) (Zea mays), soybean (SOY) (Williams) (Glycine max), wheat (WH) (Anza) (Triticum aestivum) and barley (BA) (CM-67) (Hordeum vulgare). Before the seed was covered with soil, the appropriate number of flats were sprayed at 80 GPA with solutions of one of 5 safeners at the rate of 2 lb a.i./A. After spraying the flats were placed in a greenhouse and watered lightly. Each treatment was replicated twice. The treatments were rated 27 days after application.

| Herbicide Compound No. 2 lb/A | Antidote 2 lb/A | VL | SOY | WG | WH | BA | CN XL-55A |
|---|---|---|---|---|---|---|---|
| 0.01<br>.-<br>0<br>1<br>0 | B | 100/100 | 28/20 | 99/80 | 68/45 | 20/25 | 5/0 |
| | A | 100/100 | 30/20 | 92/80 | 58/45 | 18/25 | 13/0 |
| | F | 100/100 | 30/20 | 15/80 | 3/45 | 3/25 | 3/0 |
| | G | 80/100 | 20/20 | 95/80 | 70/45 | 45/25 | 5/0 |
| | H | 99/100 | 45/20 | 90/80 | 75/45 | 60/25 | 28/0 |
| 0.02<br>.-<br>0<br>2<br>0 | B | 100/100 | 50/55 | 99/97 | 75/80 | 60/55 | 5/23 |
| | A | 100/100 | 65/55 | 97/97 | 85/80 | 63/55 | 35/23 |
| | F | 100/100 | 65/55 | 53/97 | 10/80 | 10/55 | 3/23 |
| | G | 80/100 | 60/55 | 100/97 | 78/80 | 50/55 | 23/23 |
| | H | 100/100 | 70/55 | 100/97 | 80/80 | 65/55 | 63/23 |

TESTS V

Method of Application and Procedure:
Pre-emergence Tank-mix Applied (PES-TM)
Soil type: Sandy Loam Soil
Rating:
Early - 14 days after treatment
Late - 28 days after treatment
Seedings:
Crop:
Corn Varieties Treated
Corn 7751
Corn 8415
Corn 6060
Corn 7780
Corn 3737
Weed:
SETVI - (Setaria viridis) - green foxtail
Herbicide: Compound 1
Antidote: B = 2,2,5-trimethyl-N-dichloroacetyl oxazolidine

Reported in Table V is the percent control for the weed specie and the average percent injury by bleaching and stunting to the corn varieties. The mean of two replications is reported.

TEST V

| Early Rating | | | |
|---|---|---|---|
| Herbicide + Antidote Rate (lb/A) | SETVI | Average Corn * | |
| | | BL* | ST |
| 0.03125 + 0.125 | 70/82 | 8/12 | 4/2 |
| 0.03125 + 0.25 | 80/82 | 6/12 | 5/2 |
| 0.03125 + 0.50 | 88/82 | 7/12 | 5/2 |
| 0.03125 + 1.00 | 83/82 | 3/12 | 0/2 |
| 0.03125 + 2.00 | 85/82 | 4/12 | 9/2 |
| 0.03125 + 4.00 | 83/82 | 6/12 | 5/2 |
| 0.03125 + 8.00 | 85/82 | 4/12 | 6/2 |
| 0.0625 + 0.125 | 90/93 | 26/34 | 9/14 |
| 0.0625 + 0.25 | 100/93 | 16/34 | 9/14 |
| 0.0625 + 0.50 | 93/93 | 13/34 | 6/14 |
| 0.0625 + 1.00 | 88/93 | 5/34 | 6/14 |
| 0.0625 + 2.00 | 98/93 | 19/34 | 11/14 |
| 0.0625 + 4.00 | 93/93 | 14/34 | 4/14 |
| 0.0625 + 8.00 | 63/93 | 12/34 | 3/14 |
| 0.083 + 0.125 | 93/88 | 25/25 | 8/8 |
| 0.083 + 0.25 | 100/88 | 26/25 | 10/8 |
| 0.083 + 0.50 | 100/88 | 18/25 | 8/8 |
| 0.083 + 1.00 | 99/88 | 24/25 | 5/8 |
| 0.083 + 2.00 | 98/88 | 29/25 | 11/8 |
| 0.083 + 4.00 | 80/88 | 17/25 | 6/8 |
| 0.083 + 8.00 | 88/88 | 18/25 | 3/8 |
| 0.125 + 0.125 | 100/100 | 47/45 | 24/18 |
| 0.125 + 0.25 | 95/100 | 35/45 | 16/18 |
| 0.125 + 0.50 | 100/100 | 29/45 | 8/18 |
| 0.125 + 1.00 | 100/100 | 30/45 | 12/18 |
| 0.125 + 2.00 | 100/100 | 28/45 | 17/18 |
| 0.125 + 4.00 | 100/100 | 23/45 | 9/18 |
| 0.125 + 8.00 | 99/100 | 32/45 | 13/18 |
| 0.25 + 0.125 | 100/100 | 59/55 | 32/27 |
| 0.25 + 0.25 | 100/100 | 66/55 | 25/27 |
| 0.25 + 0.50 | 100/100 | 45/55 | 24/27 |
| 0.25 + 1.00 | 100/100 | 46/55 | 22/27 |
| 0.25 + 2.00 | 100/100 | 55/55 | 24/27 |
| 0.25 + 4.00 | 100/100 | 55/55 | 28/27 |
| 0.25 + 8.00 | 100/100 | 51/55 | 26/27 |

* BL = bleaching
ST = stunting

TEST V

| Late Rating | | | |
|---|---|---|---|
| Herbicide + Antidote Rate (lb/A) | SETVI | Average Corn * | |
| | | BL* | ST |

| | | | |
|---|---|---|---|
| 0.03125 + 0.125 | 63/84 | 2/3 | 5/7 |
| 0.03125 + 0.25 | 83/84 | 0/3 | 3/7 |
| 0.03125 + 0.50 | 85/84 | 1/3 | 7/7 |
| 0.03125 + 1.00 | 83/84 | 1/3 | 3/7 |
| 0.03125 + 2.00 | 80/84 | 1/3 | 7/7 |
| 0.03125 + 4.00 | 75/84 | 2/3 | 8/7 |
| 0.03125 + 8.00 | 75/84 | 1/3 | 5/7 |
| 0.0625 + 0.125 | 85/88 | 8/7 | 19/19 |
| 0.0625 + 0.25 | 85/88 | 1/7 | 7/19 |
| 0.0625 + 0.50 | 100/88 | 4/7 | 7/19 |
| 0.0625 + 1.00 | 85/88 | 1/7 | 4/19 |
| 0.0625 + 2.00 | 93/88 | 3/7 | 9/19 |
| 0.0625 + 4.00 | 88/88 | 3/7 | 4/19 |
| 0.0625 + 8.00 | 55/88 | 3/7 | 8/19 |
| 0.083 + 0.125 | 88/88 | 7/8 | 12/11 |
| 0.083 + 0.25 | 100/88 | 9/8 | 13/11 |
| 0.083 + 0.50 | 100/88 | 3/8 | 9/11 |
| 0.083 + 1.00 | 100/88 | 2/8 | 7/11 |
| 0.083 + 2.00 | 98/88 | 8/8 | 19/11 |
| 0.083 + 4.00 | 85/88 | 3/8 | 8/11 |
| 0.083 + 8.00 | 88/88 | 5/8 | 8/11 |
| 0.125 + 0.125 | 100/100 | 21/19 | 32/33 |
| 0.125 + 0.25 | 88/100 | 11/19 | 15/33 |
| 0.125 + 0.50 | 100/100 | 10/19 | 13/33 |
| 0.125 + 1.00 | 100/100 | 11/19 | 18/33 |
| 0.125 + 2.00 | 100/100 | 7/19 | 19/33 |
| 0.125 + 4.00 | 100/100 | 6/19 | 6/33 |
| 0.125 + 8.00 | 100/100 | 11/19 | 16/33 |
| 0.25 + 0.125 | 100/100 | 33/34 | 58/45 |
| 0.25 + 0.25 | 100/100 | 47/34 | 53/45 |
| 0.25 + 0.50 | 100/100 | 33/34 | 41/45 |
| 0.25 + 1.00 | 100/100 | 25/34 | 37/45 |
| 0.25 + 2.00 | 100/100 | 30/34 | 35/45 |
| 0.25 + 4.00 | 100/100 | 29/34 | 38/45 |
| 0.25 + 8.00 | 100/100 | 20/34 | 33/45 |

* BL = bleaching
ST - stunting

A formulation is the incorporation of a formulant in a form which is directly usable on crops and weeds. As defined herein, a "formulant" is the material which is to be formulated. The formulant may be either an antidote compound alone or an herbicide and antidote composition. The purpose of the formulation is to apply the formulant to the locus where it is desired to establish herbicidal selectivity by a convenient method. The "locus" may include soil, seeds, crop, crop seeds, seedlings and vegetation.

The antidotes described herein can be formulated in a number of ways for suitable application: (a) the antidote can be formulated for application directly to the crop seed; (b) the antidote and herbicide may be formulated separately and applied separately or applied simultaneously in an appropriate weight ratio, e.g., as a tank mix, or (c) the antidote and herbicide may be formulated together in the proper weight ratio.

Useful formulations of the compounds of this invention can be prepared in conventional ways. They include dusts, granules, microcapsules, pellets, solutions, suspensions, emulsions, wettable powders, emulsifiable concentrates and the like. Many of these may be applied directly to the crop locus. Sprayable formulations can be extended in suitable media and used at spray volumes of from a few liters to several hundred liters per hectare. High strength compositions are primarily used as intermediates for further formulation. The formulations, broadly, contain about 0.1% to 99% by weight of active herbicide and antidote ingredient(s) and at least one of (a) about 0.1% to 20% surfactant(s) and (b) about 1% to 99.9% solid or liquid inert diluent(s). More specifically, they can contain these ingredients in the following approximate proportions.

TABLE 2

| | Active Herb. & Ant. Ingredients | Weight Percent * | |
|---|---|---|---|
| | | Diluent(s) | Surfactant(s) |
| Wettable Powders | 20-90 | 0-74 | 1-10 |
| Oil Suspensions Emulsions, Solutions, (including Emulsifiable Concentrates), | 3-50 | 40-95 | 0-15 |
| Aqueous Suspension | 10-50 | 40-84 | 1-20 |
| Dusts | 1-25 | 70-99 | 0-5 |
| Granules and Pellets | 0.1-95 | 5-99.9 | 0-15 |
| High Strength Compositions | 90-99 | 0-10 | 0-2 |

*Active ingredient plus at least one of a Surfactant or a Diluent equals 100 weight percent.

Lower or higher levels of active ingredient can, of course, be present depending on the intended use and the physical properties of the compound. Higher ratios of surfactant to active ingredient are sometimes desirable, and are achieved by incorporation into the formulation or by tank mixing.

Dusts are free-flowing powder compositions containing the formulant impregnated on a particulate carrier. The particle size of the carriers is usually in the approximate range of 30 to 50 microns. Examples of suitable carriers are talc, bentonite, diatomaceous earth, and pyrophyllite. The composition generally contains up to 50% of formulant. Anti-caking and anti-static agents may also be added. Dusts may be applied by spraying from boom sprayers, hard sprayers or airplanes.

Wettable powders are finely divided compositions comprising a particular carrier impregnated with the formulant and additionally containing one or more surface active agents. The surface active agent promotes rapid dispersion of the powder in an aqueous medium to form stable, sprayable suspensions. A wide variety of surface active agents can be used, for example, long chain fatty alcohols and alkali metal salts of the sulfated fatty alcohols; salts of sulfonic acid; esters of long chain fatty acids; and polyhydric alcohols, in which the alcohol groups are free, omega-substituted polyethylene glycols of relatively long chain length. A list of surface active agents suitable for use in agriculture formulations can be found in Wade Van Valkenburg, Pesticide Formulations (Marcel Dekker, Inc., N.Y., 1973) at pages 79-84.

Granules comprise the formulant impregnated on a particulate inert carrier having a particle size of about 1 to 2 millimeters (mm) in diameter. The granules can be made by spraying a solution of the formulant in a volatile solvent onto the granular carrier. Examples of suitable carriers for the preparation of granules include clay, vermiculite, sawdust, and granular carbon. Microcapsules or other slow release formulations are advantageous as a formulation to deliver and distribute the active ingredients. Microcapsules consist of fully enclosed droplets or granules containing the active materials in which the enclosing material is an inert porous membrane, arranged to allow escape of the enclosed materials to the surrounding medium at controlled rates over a specified period of time. Encapsulated droplets are typically about 1 to 50 microns in diameter. The enclosed liquid typically constitutes about 50 to 95% of the weight of the entire capsule, and may contain an amount of solvent in addition to the active materials. Encapsulated granules are characterized by porous membranes sealing the openings of the granule carrier pores, trapping the liquid containing the active components inside for controlled release. A typical granule size ranges from 1 millimeter to 1 centimeter in diameter. In agricultural usage, the granule size is generally about 1 to 2 millimeters in diameter. Granules formed by extrusion, agglomeration or prilling are useful in the present invention, as well as materials in their naturally occurring form. Examples of such carriers are vermiculite, sintered clay granules, kaolin, attapulgite clay, sawdust and granular carbon. Useful encapsulating materials include natural and synthetic rubbers, cellulosic materials, styrene-butadiene copolymers, polyacrylonitriles, polyacrylates, polyesters, polyamides, polyureas, polyurethanes and starch xanthates.

Emulsifiable concentrates consist of an oil solution of the formulant plus an emulsifying agent. Prior to use, the concentrate is diluted with water to form a suspended emulsion of oil droplets. The emulsifiers used are usually a mixture of anionic and nonionic surfactants. Other additives, such as suspending agents and thickeners, may be included in the emulsifiable concentrate.

When the formulant is an antidote and herbicide composition, the proportion of antidote compound to herbicide compound generally ranges from approximately 0.001 to 30 parts by weight of the antidote compound per weight of the herbicide compound.

Formulations generally contain several additives in addition to the formulant and carrier or agent. Among these are inert ingredients, diluent carriers, organic solvents, water, oil and water, water in oil emulsions, carriers of dusts and granules, and surface active wetting, dispersing and emulsifying agents. Fertilizers, e.g., ammonium nitrate urea and superphosphate, may be included. Aids to rooting and growth, e.g., compost, manure, humus and sand, may also be included.

Alternatively, the antidote compounds and herbicide and antidote compositions of this invention can be applied to a crop by addition of the formulant to irrigation water supplied to the field to be treated. This method of application permits the penetration of the compositions into the soil as the water is absorbed.

As another alternative, the formulant can be applied to the soil in the form of a solution in a suitable solvent. Solvents frequently used in these formulations include kerosene, fuel oil, xylene, petroleum fractions with boiling ranges above xylene and aromatic petroleum fractions rich in methylated naphthalenes. Liquid solutions, like dusts, may be applied by spraying from boom and hand sprayers or airplanes.

EXAMPLE

Dusts: The following substances are used to formulate (a) 5% and (b) a 2% dust:

(a)

5 parts of active substance
95 parts of talc;

(b)

2 parts of active substance
1 part of highly dispersed silicic acid
97 parts of talc.
The active substances are mixed with the carriers and ground and in this form can be processed to dusts for application.

EXAMPLE

Granulate: The following substances are used to formulate a 5% granulate:
5 parts of active substance
0.25 part of epichlorohydrin
0.25 part of cetyl polyglycol ether
3.25 parts of polyethylene glycol
91 parts of kaolin (particle size 0.3-0.8 mm).
The active substance is mixed with epichlorohydrin and the mixture is dissolved in 6 parts of acetone. Then polyethylene glycol and cetyl polyglycol ether are added. The resultant solution is sprayed on kaolin and the acetone is evaporated in vacuo.

EXAMPLE

Wettable powders: The following constituents are used to formula (a) a 70%, (b) a 40%, (c) and (d) a 25% and (e) a 10% wettable powder.

(a)

70 parts of active substance
5 parts of sodium dibutylnaphthylsulfonate
3 parts of naphthalenesulfonic acid/phenolsulfonic acid/formaldehyde condensate (3:2:1)
10 parts of kaolin
12 parts of Champagne chalk

(b)

40 parts of active substance
5 parts of sodium ligninsulfonate
1 part of sodium dibutylnaphthalenesulfonic acid
54 parts of silicic acid

(c)

25 parts of active substance
4.5 parts of calcium ligninsulfate
1.9 parts of Champagne chalk/hydroxyethyl cellulose mixture (1:1)
1.5 parts of sodium dibutylnaphthalenesulfonate
19.5 parts of silicic acid
19.5 parts of Champagne chalk
28.1 parts of kaolin

(d)

25 parts of active substance
2.5 parts of isooctylphenoxy-polyethylene-ethanol 1.7 parts of a Champagne chalk/hydroxyethyl cellulose mixture (1:1)
8.3 parts of sodium aluminum silicate
16.5 parts of kieselguhr
46 parts of kaolin

(e)

10 parts of active substance
3 parts of a mixture of the sodium salts of saturated fatty alcohol sulfates
5 parts of naphthalenesulfonic acid/formaldehyde condensate
82 parts of kaolin.

The active substances are intimately mixed in suitable mixers with the additives and ground in appropriate mills and rollers. Wettable powders of excellent wettability and suspension power are obtained. These wettable powders can be diluted with water to give suspensions of the desired concentration and can be used in particular for treating parts of plants.

## EXAMPLE

Emulsifiable concentrate: The following substances are used to formulate a 25% emulsifiable concentrate:
25 parts of active substance
2.5 parts of epoxidized vegetable oil
10 parts of an alkylarylsulfonate/fatty alcohol polyglycol ether mixture

5 parts of dimethylformamide
57.5 parts of xylene.

By diluting such a concentrate with water it is possible to prepare emulsions of the desired concentrations, which are especially suitable for leaf application.

## Claims

1. A herbicidal composition characterised in that it comprises a herbicidally effective amount of an acylated 1,3,5-tricarbonyl cyclohexyl compound corresponding to the following general formula:

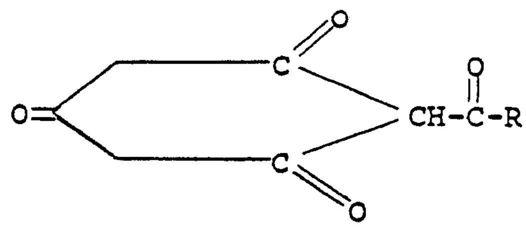

and tautomeric enol forms thereof, which is optionally substituted in the cyclohexyl position, and R represents an optionally substitiuted aromatic moiety with one or more aromatic groups; and a non-phytotoxic antidotally effective amount of a compound selected from amides of haloalkanoic acids, N-phenylcarbamates, N-phenylsulfonyl carbamates and 1,8-naphthalic anhydride.

2. A composition as claimed in claim 1 wherein the herbicidally-active component corresponds to the following general formula:

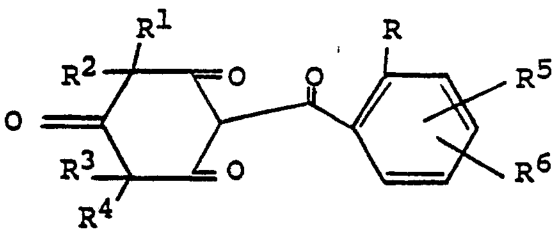

(I)

wherein

R represents hydrogen, halogen, $C_1$ or $C_2$ alkyl, $C_1$ or $C_2$ alkoxy, nitro, cyano, $C_1$ or $C_2$ haloalkyl, $R^aSO_n$- wherein n represents 0 or 2 and $R^a$ represents $C_1$ or $C_2$ alkyl, tri- or di-fluoromethyl, or tri- or di-fluoromethoxy; and

$R^1$ and $R^2$ independently represent hydrogen or $C_1$-$C_4$ alkyl, or

$R^1$ and $R^2$ together represent $C_2$-$C_5$ alkylene;

$R^3$ and $R^4$ independently represent $C_1$-$C_4$ alkyl, or

$R^3$ and $R^4$ together represent $C_2$-$C_5$ alkylene;

$R^5$ and $R^6$ independently represent (1) hydrogen; (2) halogen; (3) $C_1$-$C_4$ alkyl; (4) $C_1$-$C_4$ alkoxy; (5) trifluoromethoxy; (6) cyano; (7) nitro; (8) $C_1$-$C_4$ haloalkyl; (9) $R^bSO_n$- wherein n represents 0, l or 2; and

$R^b$ represents (a) $C_1$-$C_4$ alkyl;

(b) $C_1$-$C_4$ alkyl substituted with halogen or cyano,

(c) phenyl; or

(d) benzyl;

(10) -$NR^cR^d$ wherein $R^c$ and $R^d$ independently represent hydrogen or $C_1$-$C_4$ alkyl;

(11) $R^eC(O)$- wherein $R^e$ represents $C_1$-$C_4$ alkyl or $C_1$-$C_4$ alkoxy;

(12) -$SO_2NR^cR^d$ wherein $R^c$ and $R^d$ are as defined above; or

(13) -$N(R^c)C(O)R^d$ wherein $R^e$ and $R^d$ are as defined above.

3. A composition as claimed in claim 1 or claim 2 wherein the herbicidally-active component comprises from 13 to 42 carbon atoms.

4. A composition as claimed in any of claims 1 to 3 wherein the antidotally-active component is an amide of a haloalkanoic acid.

5. A composition as claimed in any of claims 1 to 4 wherein the haloalkanoic acid is dichloroacetic acid or dibromopropionic acid.

6. A composition as claimed in any of claims 1 to 5 wherein the antidotally-active component is an amide of a haloalkanoic acid wherein the nitrogen atom is in an oxazolidine or thiazolidine ring.

7. A process for the production of a composition as claimed in claim 1 characterised in that it comprises mixing the components.

8. A method of controlling undesired vegetation in the presence of desired vegetation characterised in that it comprises applying a composition as claimed in claim 1.

9. A method of reducing injury to a crop caused by a herbicidally-active component as defined in claim 1 characterised in that it comprises the use of an antidotally-active component as defined in claim 1.

10. A method as claimed in claim 8 or claim 9 wherein treatment of a crop seed or soil incorporation treatment is involved.